(19) Europäisches Patentamt
European Patent Office
Office européen des brevets

(11) EP 4 296 081 B1

(12) EUROPEAN PATENT SPECIFICATION

(45) Date of publication and mention of the grant of the patent:
**15.10.2025 Bulletin 2025/42**

(21) Application number: **23173439.3**

(22) Date of filing: **15.05.2023**

(51) International Patent Classification (IPC):
***B60C 1/00*** $^{(2006.01)}$ ***B60C 11/00*** $^{(2006.01)}$

(52) Cooperative Patent Classification (CPC):
**B60C 11/005; B60C 1/0016;** B60C 2011/0025; B60C 2011/0033

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.06.2022 JP 2022101541**

(43) Date of publication of application:
**27.12.2023 Bulletin 2023/52**

(73) Proprietor: **Sumitomo Rubber Industries, Ltd.
Kobe-shi, Hyogo 651-0072 (JP)**

(72) Inventors:
- **KAWACHI, Takahiro
Kobe-shi, Hyogo, 651-0072 (JP)**
- **NAKAMURA, Kentaro
Kobe-shi, Hyogo, 651-0072 (JP)**

(74) Representative: **Manitz Finsterwald
Patent- und Rechtsanwaltspartnerschaft mbB
Martin-Greif-Straße 1
80336 München (DE)**

(56) References cited:
**EP-A1- 2 698 262**
**EP-A1- 4 137 331**
**EP-A2- 2 452 834**
**WO-A1-2021/215278**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

[TECHNICAL FIELD]

The present invention relates to a tire.

[BACKGROUND ART]

In recent years, small SUVs (Sport Utility Vehicles: multipurpose sports car) and light commercial vehicles have become popular as camping vehicles. When driving on uneven ground (rough road surface) on the way to the campsite, the surface of the tires installed on the vehicle will come into contact with the road surface, causing the blocks on the tread surface to chip. Therefore, the tires are required to have sufficient chipping resistance performance.

Hence, conventionally, it has been proposed to improve the chipping resistance performance by devising the rubber composition constituting the tread portion of the tire and the surface shape of the tread portion (for example, Patent Documents 1 to 3). Further, Patent document 4 proposes tires which can improve durability and ride comfort with a good balance, and discloses tires comprising a tread formed from at least one rubber layer, in particular a rubber layer comprises a first and a second layers, wherein the first layer can be used for a cap tread. This first (cap) rubber layer comprises silica and either NR/SBR/BR or NR/SBR as a rubber component, wherein the used SBR has a styrene content of 30% by mass. Further, Patent document 5 discloses a radial tire for a passenger vehicle that maintains a low rolling resistance while having good wet traction and treadwear throughout the usable life of the tire.

[Prior art documents]

[Patent documents]

[Patent document 1] JP2016-155980A
[Patent document 2] JP2019-137123A
[Patent document 3] JP2021-165324A
[Patent document 4] WO 2021 / 215 278 A1 & EP 4 137 331 A1
[Patent document 5] EP 2 452 834 A2

[SUMMARY OF INVENTION]

[PROBLEM TO BE SOLVED BY THE INVENTION]

However, the chipping resistance performance of the tire manufactured based on the above-described conventional technology is still not sufficient, and further improvement is desired.

Accordingly, an object of the present invention is to improve chipping resistance performance of tire.

[MEANS FOR SOLVING THE PROBLEM]

The present invention is

a tire having a tread portion, wherein
the tread portion has a cap rubber layer and a base rubber layer provided radially inward of the cap rubber layer,
the cap rubber layer contains
, as a rubber component, 40 parts by mass or more and 60 parts by mass or less of styrene-butadiene rubber (SBR) with a styrene content of 20% by mass or less, and 30 parts by mass or less of isoprene-based rubber, in 100 parts by mass of the rubber component, and
, as a filler, 100 parts by mass or less of silica with respect to 100 parts by mass of the rubber component; and
is formed from a rubber composition having a loss tangent 30°C tan $\delta$ of 0.25 or less measured under conditions of temperature of 30°C, frequency of 10 Hz, initial strain of 5%, and dynamic strain rate of 1%, and deformation mode: tensile; and
the ratio of the thickness of the cap rubber layer to the thickness of the base rubber layer is 2.3 or more.

[EFFECT OF THE INVENTION]

According to the present invention, it is possible to improve chipping resistance performance.

[EMBODIMENTS FOR CARRYING OUT THE INVENTION]

[1] Features of the tire according to the present invention

First, the features of the tire according to the present invention will be explained.

1. Overview

A tire according to the present invention has

a carcass that is a frame of the tire by being bridged between one and the other of a pair of bead portions that are portions to be fitted with a rim,
a belt layer provided radially outwardly of the carcass,
a belt reinforcing layer provided radially outward of the belt layer, and
a tread portion provided radially outward of these layers.

The tread portion has a cap rubber layer that is provided radially outward of the tire to serve as a ground contact surface, and if necessary, further has a base rubber layer that is provided radially inward of the cap rubber layer.
The cap rubber layer is formed from a rubber composition containing

40 parts by mass or more and 60 parts by mass or less of a styrene-butadiene rubber (SBR) having a styrene content of 20% by mass or less, and 30 parts by mass or less of isoprene-based rubber, as a rubber component, in 100 parts by mass of the rubber component, and
further contains 100 parts by mass or less of silica as a filler with respect to 100 parts by mass of the rubber component.

In addition, the loss tangent 30°Ctan δ of this rubber composition measured under the conditions of temperature of 30°C, frequency of 10 Hz, initial strain of 5%, dynamic strain rate of 1%, deformation mode: tensile is 0.25 or less. Furthermore, the ratio of the thickness of the cap rubber layer to the thickness of the base rubber layer is 2.3 or more.
The cap rubber layer is not limited to the rubber layer forming the outermost layer of the tread portion, but refers to a layer within 5 mm from the tread surface toward the inside. When there are two or more layers within 5 mm, at least one layer should satisfy the requirements of the rubber composition.
By having these features, as will be described later, it is possible to improve the chipping resistance performance.

2. Mechanism of effect manifestation in tire according to the present invention

The mechanism of effect manifestation in the tire according to the present invention is presumed as follows.
As described above, the cap rubber layer of the tire according to the present invention contains, as a rubber component, 40 parts by mass or more and 60 parts by mass or less of styrene-butadiene rubber (SBR) having a styrene content of 20% by mass or less in 100 parts by mass of the rubber component, and further contains 30 parts by mass or less of isoprene-based rubber.
By containing 40 parts by mass or more and 60 parts by mass or less of SBR with a styrene content of 20% by mass or less in 100 parts by mass of the rubber component, an appropriate styrene portion is generated in the rubber component, and styrene domains are easily formed. By forming such styrene domains, it is considered that the propagation of the impacts and cracks from the tire surface can be suppressed at the interface with the molecular chains of other rubber components.
By adding 30 parts by mass or less of isoprene-based rubber in addition to the above-described SBR, a phase separation structure is formed between SBR and isoprene-based rubber, and micro layers with different hardness coexist in the rubber phase. It is considered that the mixture of such micro layers with different hardness can suppress the propagation of impacts and cracks from the tire surface.
By suppressing the propagation of impacts and cracks from the tire surface in this way, the chipping resistance performance can be improved.
Further, in the present invention, the rubber composition forming the cap rubber layer contains silica as a filler.
Silica can reinforce the rubber without excessively increasing the heat build-up of the tire (, which causes softening of the rubber and makes it easy to tear), so it is a preferable filler for improving the chipping resistance

performance. However, when the filling amount is too large, specifically, when the content exceeds 100 parts by mass with respect to 100 parts by mass of the rubber component, although the reinforcing properties of the rubber are enhanced, brittle fracture of the rubber is likely to occur, and, on the contrary, there is a risk of causing a decrease in chipping resistance performance.

Therefore, in the present invention, the rubber composition forming the cap rubber layer contains silica in an amount not exceeding the component, that is, 100 parts by mass or less per 100 parts by mass of the rubber component, as the content that can sufficiently form a network to reinforce the rubber while suppressing an excessive increase in the heat build-up of the tire. As a result, it is considered that the chipping resistance performance can be further improved, while ensuring the reinforcing properties of the rubber, coupled with the above-mentioned suppression of impact and crack propagation from the tire surface by the SBR or isoprene-based rubber.

Furthermore, in the present invention,

the loss tangent 30°Ctan δ of the rubber composition forming the cap rubber layer, measured under the conditions of temperature of 30°C, frequency of 10 Hz, initial strain of 5%, dynamic strain rate of 1%, deformation mode: tensile, is 0.25 or less.

Loss tangent tan δ is a viscoelastic parameter that indicates energy absorption performance. The lower the value, the more the heat generation of the rubber during running can be suppressed and the temperature rise can be suppressed, and it is considered that the deterioration of the fracture characteristics due to the temperature rise can be sufficiently suppressed, and the chipping resistance performance can be further improved.

In the present invention, the tread portion has a cap rubber layer provided radially outward of the tire and a base rubber layer provided radially inward of the cap rubber layer, and the ratio of the thickness of the cap rubber layer to the thickness of the base rubber layer is set to 2.3 or more.

By stacking the cap rubber layer and the base rubber layer, it is possible to suppress the propagation of impacts and cracks from the tire surface even at the interface between them, so that it is considered that the chipping resistance performance can be further improved.

At this time, if the thickness of the cap rubber layer is too thin compared to the base rubber layer, specifically, if the ratio of the thickness of the cap rubber layer to the thickness of the base rubber layer is less than 2.3, cracks that develop and propagate in the cap rubber layer reach the interface of the base rubber layer in a short period of time, and, starting from this crack, the rubber may be torn off, leading to a drop in chipping resistance performance.

As described above, in the present invention, in addition to the cooperation of the effect of suppressing the propagation of impacts and cracks from the tire surface by containing low styrene SBR, isoprene rubber, and silica in the rubber composition forming the cap rubber layer, the rubber reinforcement effect by silica, and the effect of suppressing the deterioration of fracture characteristics due to the temperature rise by the low 30°C tanδ, the effect of suppressing the propagation of impacts and cracks from the tire surface at the tread portion provided with the cap rubber layer and the base rubber layer set to an appropriate thickness ratio also works together, and, as a result, it is considered that the chipping resistance performance can be improved.

In the present invention, the styrene content is 20% by mass or less, further preferably 19.5% by mass or less, and further preferably 15% by mass or less. On the other hand, as the lower limit, it is preferably 3% by mass or more, more preferably 5% by mass or more, and further preferably 8% by mass or more.

The above-mentioned "containing 40 parts by mass or more and 60 parts by mass or less of SBR having a styrene content of 20% by mass or less in 100 parts by mass of the rubber component" means that the amount of SBR in 100 parts by mass of the rubber component is 40 parts by mass or more and 60 parts by mass or less, and that the styrene content in the entire SBR is 20% by mass or less.

That is, when a styrene-containing polymer (SBR) is contained alone in the rubber component, it indicates that the styrene content of the polymer is 20% by mass or less. When multiple styrene-containing polymers (SBR) are contained in the rubber component, it indicates that the styrene content obtained from the sum of the product of the styrene content (mass%) in each polymer and the compounding amount (mass parts) of each polymer per 100 parts by mass of the rubber component is 20% by mass or less.

More specifically, when 100 parts by mass of the rubber component contains X1 parts by mass of SBR1 with a styrene content of S1% by mass and X2 parts by mass of SBR2 with a styrene content of S2% by mass, it is indicated that the styrene content calculated from the formula $\{(S1 \times X1) + (S2 \times X2)\} / (X1+X2)$ is 20% by mass or less.

In addition, in the vulcanized rubber composition, the styrene content can also be calculated by determining the amount of styrene contained in the rubber component after acetone extraction using solid-state nuclear magnetic resonance (solid-state NMR) or Fourier transform infrared spectrophotometer (FTIR).

In the present invention, the content of SBR in 100 parts by mass of the rubber component is more preferably 50 parts by mass or more, and further preferably 60 parts by mass or more. Moreover, the content of the isoprene-based rubber in 100 parts by mass of the rubber component is more preferably 15 parts by mass or more and 25 parts by mass or less, and further preferably 20 parts by mass or less.

In addition, the content of silica is more preferably 95 parts by mass or less, more preferably 80 parts by mass or

less, further preferably 70 parts by mass or less, and further preferably 60 parts by mass or less with respect to 100 parts by mass of the rubber component.

In the present invention, the 30°C tanδ is more preferably 0.24 or less, further preferably 0.23 or less, further preferably 0.20 or less, further preferably 0.19 or less, further preferably 0.18 or less, further preferably 0.16 or less, and further preferably 0.15 or less. Although the lower limit is not particularly limited, it is preferably 0.10 or more, more preferably 0.11 or more, further preferably 0.12 or more, further preferably 0.13 or more, and further preferably 0.14 or more. The 30°C tanδ of the base rubber layer is preferably smaller than the 30°C tanδ of the cap rubber layer.

In the case of the multi-layered tread portion, it is preferable that the 30°C tan δ (30°Ctan δ B) of the base rubber layer is made smaller than the 30°C tan δ (30°Ctan δ C) of the cap rubber layer, that is, 30°Ctan δ B / 30°Ctan δ C < 1. As a result, it is possible to reduce the phase difference between the grip performance generated by the cap rubber layer and the response inside the tire, resulting in better responsiveness. By this, it is considered that excellent steering stability during high-speed running can be obtained. Although specific (30°Ctan δ B / 30°Ctan δ C) is not particularly limited as long as it is less than 1, as the upper limit, for example, it is preferably 0.55 or less and as the lower limit, for example, it is preferably 0.25 or more.

Here, the "loss tangent (tan δ)" can be measured, for example, using a viscoelasticity measuring device such as "Eplexor (registered trademark)" manufactured by GABO.

Although the method for adjusting tan δ is not particularly limited, for example, it can be raised by increasing the amount of styrene in the polymer, increasing the content of the resin component, increasing the content of carbon black, etc., and it can be lowered by reducing the amount of styrene in the polymer, reducing the content of the resin component, reducing the content of carbon black, etc.

Furthermore, in the present invention, the ratio of the thickness of the cap rubber layer to the thickness of the base rubber layer is more preferably 4.0 or more, further preferably 8.0 or more, and further preferably 9.0 or more.

Here, the "thickness of the cap rubber layer" refers to the thickness of the cap rubber layer on the tire equatorial plane in the tire radial cross section. In case the tire has a groove on the equatorial plane, it refers to the thickness from the intersection of a straight line connecting the outermost endpoints of the groove in the radial direction of the tire and the tire equatorial plane to the interface with the innermost base rubber layer in the tire radial direction of the tread portion. The "thickness of the base rubber layer" refers to the thickness from the interface with the cap rubber layer to the innermost interface in the tire radial direction of the tread portion.

In the present invention, the term "groove" refers to those having an opening where the width is 3 mm or more on the outermost surface of the tread portion and the depth is 3 mm or more.

The thicknesses of the cap rubber layer and the base rubber layer can be measured by aligning the bead portion with the standardized rim width in a cross section obtained by cutting the tire in the radial direction.

In the above, the "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK". JATMA, ETRTO, and TRA are referred to in that order, and if there is an applicable size at the time of reference, that standard is followed. In the case of tires that are not specified in the standard, it refers a rim that can be assembled and can maintain internal pressure, that is, the rim that does not cause air leakage from between the rim and the tire, and has the smallest rim diameter, and then the narrowest rim width.

[2] More preferable embodiment of the tire according to the present invention

The tire according to the present invention can obtain a larger effect by taking the following embodiment.

1. Relationship between 30°Ctan δ of cap rubber layer and thickness of tread portion

In the tire according to the present invention, when the thickness of the tread portion is G (mm), α in the following formula is preferably 1.68 or less, more preferably 1.65 or less, further preferably 1.61 or less, further preferably 1.50 or less, further preferably 1.40 or less, further preferably 1.33 or less, further preferably 1.26 or less, and further preferably 1.20 or less. As described above, it is considered possible to suppress the temperature rise in the cap rubber layer by lowering the 30°Ctan δ. In addition, it is considered that the thicker the tread portion, the more easily the influence of heat accumulation in the tread portion occurs. Therefore, it is considered that by setting the product of these factors to a certain value or less, heat generation and heat accumulation in the cap rubber layer can be suppressed, thereby making it easier to improve the chipping resistance performance.

$$\alpha = 30°\text{Ctan}\ \delta \times G \qquad (1)$$

Although the lower limit of the above $\alpha$ is not particularly limited, it is preferably 0.05 or more, more preferably 0.20 or more, further preferably 0.50 or more, further preferably 0.84 or more, further preferably 0.91 or more, further preferably 0.98 or more, further preferably 1.05 or more, and further preferably 1.12 or more.

2. Loss tangent at 0°C (0°Ctan $\delta$) of the rubber composition forming the cap rubber layer

In the above, 30°Ctan $\delta$ is specified. However, it is considered that the surface of the tread portion is likely to slip when running on uneven ground. Then, on the tread surface, the contribution of the viscoelasticity of the cap rubber layer at a lower temperature is considered to increase. Therefore, the loss tangent (0°Ctan $\delta$) of the rubber composition forming the cap rubber layer, measured under the conditions of temperature of 0°C, frequency of 10Hz, initial strain of 5%, dynamic strain rate of 1%, deformation mode: tensile, is preferably 0.31 or less, more preferably 0.30 or less, further preferably 0.28 or less, further preferably 0.27 or less, further preferably 0.26 or less, further preferably 0.25 or less, and further preferably 0.24 or less. Although the lower limit is not particularly limited, it is preferably 0.16 or more, more preferably 0.18 or more, and further preferably 0.20 or more.

In the tire according to the present invention, $\beta$ in the following formula (2) is preferably 2.17 or less, more preferably 2.00 or less, further preferably 1.96 or less, further preferably 1.90 or less, further preferably 1.89 or less, further preferably 1.82 or less, further preferably 1.80 or less, further preferably 1.75 or less, further preferably 1.68 or less, and further preferably 1.50 or less. As described above, it is considered that the tread surface is largely affected by the low temperature of 0°Ctan $\delta$ during running on uneven ground. In addition, it is considered that the thicker the tread portion, the more easily the influence of heat accumulation in the tread portion occurs. Therefore, it is considered that by setting the product of these factors to a certain value or less, heat generation and heat accumulation in the cap rubber layer can be suppressed, thereby making it easier to improve the chipping resistance performance.

$$\beta = 0°\text{Ctan } \delta \times G \qquad (2)$$

Although the lower limit of $\beta$ is not particularly limited, it is preferably 0.20 or more, more preferably 0.35 or more, and further preferably 0.50 or more.

The above 0°Ctan $\delta$ can be measured, for example, using a viscoelasticity measuring device such as " Eplexor (registered trademark)" manufactured by GABO, similarly to the 30°Ctan $\delta$ of the cap rubber layer.

The 0°Ctan $\delta$ of the cap rubber layer can be appropriately adjusted by compounding materials described later. For example,

it can be raised by increasing the amount of styrene in the polymer, increasing the content of the resin component, increasing the content of silica, etc., and it can be lowered by reducing the amount of styrene in the polymer, reducing the content of the resin component, reducing the content of silica, etc.

3. Relationship between styrene content (% by mass) and tread thickness G (mm)

In the tire according to the present invention, y in the following formula (3) is preferably 2.8 or more, more preferably 2.9 or more, further preferably 3.0 or more, further preferably 3.1 or more, further preferably 3.2 or more, further preferably 3.5 or more, and further preferably 4.1 or more. By appropriately forming styrene domains in the cap rubber layer,

it becomes easier to absorb the impact from the surface. On the other hand, it is considered that

when the temperature rises due to heat accumulation during rolling of the tread, the mobility increases and it becomes difficult to maintain the domain. Therefore, it is considered that by setting the styrene content to a sufficient amount with respect to the thickness of the tread portion, it becomes easier to maintain the styrene domains in the rubber composition, and the chipping resistance performance can be improved easily.

$$\gamma = \text{Styrene content in styrene-butadiene rubber (SBR)}/G \qquad (3)$$

(3)

Although the upper limit of y is not particularly limited, it is preferably 7.0 or less, more preferably 6.0 or less, and further preferably 5.5 or less.

4. Containing butadiene rubber (BR) in the rubber composition forming the cap rubber layer

In the present invention, the rubber composition forming the cap rubber layer contains low-styrene SBR and

isoprene-based rubber as rubber components as described above. Furthermore, it is preferable to incorporate BR into a three-component mixture of rubber components.

In this way, by using a three-component mixture of rubber components, the third rubber phase having a hardness different from that of the SBR and that of the isoprene-based rubber is microscopically mixed, and a new phase separation structure is formed. It is considered that the impacts from the tire surface and the propagation of cracks can be further suppressed, and coupled with the reinforcing property, the chipping resistance performance can be further improved.

In this case, the content of BR in 100 parts by mass of the rubber component is preferably 15 parts by mass or more and 25 parts by mass or less, and particularly preferably 20 parts by mass.

5. Modulus of cap rubber layer

While the tire is running, it contacts the road surface while being deformed. If the amount of deformation is large, the deformation may tear the rubber, resulting in deterioration of the chipping resistance performance.

Therefore, it is considered that by setting the 100% elongation modulus (M100) of the cap rubber layer at 23°C to 2.0 MPa or more, the rubber is less likely to tear even when the amount of deformation increases, and the chipping resistance performance can be improved. The 100% elongation modulus (M100) is more preferably 2.1 MPa or more, further preferably 2.2 MPa or more, further preferably 2.6 MPa or more, further preferably is 2.9 MPa or more, further preferably 3.0 MPa or more, further preferably 3.1 MPa or more, further preferably 3.2 MPa or more, and further preferably 3.3 MPa or more.

The 100% elongation modulus (M100) can be measured by preparing a No. 7 dumbbell-shaped test piece with a thickness of 1 mm from a sample taken from the cap rubber layer, and subjecting it to a tensile test (Tensile speed: 500 mm/min) at 23°C according to JIS K6251:2010.

The 100% elongation modulus (M100) mentioned above can be appropriately adjusted by compounding materials described later. Specifically, it can be raised by increasing the content of fillers such as silica and carbon black, decreasing the amount of plasticizer components, increasing vulcanizing agents such as sulfur and accelerators, etc. On the other hand, it can be lowered by reducing the content of fillers such as silica and carbon black, increasing the amount of plasticizer components, reducing vulcanizing agents such as sulfur and accelerators, etc.

6. Particle size of silica contained in the cap rubber layer

In the present invention, the particle size (average primary particle size) of silica contained in the cap rubber layer is preferably 18 nm or less from the viewpoint of improving reinforcing properties.

The average primary particle size is obtained by directly observing silica extracted from the rubber composition cut out from the tire using an electron microscope (TEM) or the like, calculating the equal cross-sectional area diameter from the area of each silica particle obtained and calculating the average value.

7. Acetone extractables of cap rubber layer (AE)

In the present invention, the acetone extractables (AE) of the cap rubber layer is preferably 9.5% by mass or more, more preferably 10.0% by mass or more, and further preferably 10.5% by mass or more. On the other hand, although the upper limit is not particularly limited, it is preferably 14.8% by mass or less, more preferably 14.1% by mass or less, further preferably 14.0% by mass or less, further preferably 13.8% by mass or less, further preferably 13.4% by mass or less, further preferably 12.6% by mass or less, further preferably 12.5% by mass or less, further preferably 12.0% by mass or less, further preferably 11.5% by mass or less, further preferably 11.0% by mass or less, and further preferably 10.9% by mass or less.

The acetone extractables (AE) can be considered as an index indicating the amount of the plasticizer component and the like in the rubber composition, and can also be considered as an index indicating the softness of the rubber composition. Therefore, when the AE amount is appropriately controlled, the cap rubber layer can be appropriately deformed while maintaining its reinforcing properties, and it is considered that the chipping resistance performance is improved.

The acetone extractables (AE) can be measured according to JIS K 6229:2015. Specifically, a vulcanized rubber test piece cut out from the measurement site is immersed in acetone at room temperature and normal pressure for 72 hours, and the weight loss rate (%) of the test piece is determined to obtain AE (% by mass).

More specifically, each vulcanized rubber test piece is immersed in acetone at room temperature under normal pressure for 72 hours to extract soluble components, the mass of each test piece before and after extraction is measured and Acetone extraction amount (%) can be calculated by the following formula.

Acetone extraction amount (%) = {(mass of rubber test piece before extraction - mass of rubber test piece after extraction) / (mass of rubber test piece before extraction)}×100

Moreover, the above-mentioned acetone extraction amount can be appropriately changed by changing the compounding ratio of the plasticizer in the rubber composition.

8. Land ratio

In the tire according to the present invention, the land ratio in the tread portion of the tire installed on a standardized rim and having a standardized internal pressure is preferably 40% or more, more preferably 55% or more, further preferably 60% or more, and further preferably 63% or more.

"Land ratio" is the ratio of the actual contact area to the virtual contact area in which all the grooves on the surface of the tread are filled. It is considered that, when the land ratio is large, since the contact area with the road surface becomes large, it becomes easier to suppress local deformation, and can exhibit the effect of improving the chipping resistance performance.

Although the upper limit of the land ratio is not particularly limited, it is preferably 95% or less.

In addition, the product of the content (parts by mass) of styrene-butadiene rubber (SBR) having a styrene content of 20% by mass or less in 100 parts by mass of the rubber component and the land ratio (%) in the tread portion is preferably 2720 or more, more preferably 3000 or more, and further preferably 3400 or more. Although the upper limit is not particularly limited, it is preferably 5500 or less, and more preferably 4080 or less. As a result, the effects of the styrene domain network work together to further improve chipping resistance performance.

The above land ratio can be obtained from the ground contact shape under the conditions of standardized rim, standardized internal pressure, and standardized load.

Specifically, the tire is installed on a standardized rim, a standardized internal pressure is applied, and the tire is allowed to stand at 25°C for 24 hours). Thereafter, an ink is printed on the tire tread surface, a standardized load is applied and then the tire tread surface is pressed against a thick paper (camber angle is 0°) to transfer the ink to the paper. Thus, the contact shape can be obtained. The transfer is made at five locations by rotating the tire by 72° in the circumferential direction. That is, the ground contact shape is obtained five times. At this time, for the five ground contact shapes, the discontinuous portions with the grooves of the contour are smoothly connected, and the resulting shape is defined as a virtual contact surface.

Then, the land ratio can be obtained from (average area of the five ground contact shapes (black portions) transferred to the thick paper / average of the areas of virtual contact surfaces obtained from the five ground contact shapes) × 100 (%).

Note that, the "standardized internal pressure" is the air pressure specified for each tire by the above-mentioned standards, and is the maximum air pressure for JATMA, "INFLATION PRESSURE" for ETRTO, and the maximum value described in the table "TIRE LOAD LIMITS AT VARIOUS COLD INFLATION PRESSURES" for TRA. As in the case of "standardized rim", refer to JATMA, ETRTO, and TRA in that order, and their standards are followed. And, in the case of a tire that is not defined in the standard, it is the standardized internal pressure (however, 250 kPa or more) of another tire size (specified in the standard) for which the standardized rim is described as the standard rim. When a plurality of standardized internal pressures of 250 kPa or more are listed, the minimum value among them is referred.

In addition, the "standardized load" is the load defined for each tire by the standards in the standard system including the standard on which the tire is base and refers to the maximum mass that can be loaded on the tire, and is the maximum load capacity for JATMA, "LOAD CAPACITY" for ETRTO, and the maximum value described in "TIRE LOAD LIMITS AT VA RIOUS COLD INFLATION PRESSURES" for TRA. As in the case of "standardized internal pressure", JATMA, ETRTO, and TRA are referred to in that order, and their standards are followed. Then, in the case of a tire not specified in the standard, the standardized load WL is obtained by the following calculation.

$$V=\{(Dt/2)^2 - (Dt/2 - Ht)^2\} \times \pi \times Wt$$

$$WL = 0.000011 \times V + 175$$

WL: standardized load (kg)
V: virtual volume of tire ($mm^3$)
Dt: tire outer diameter Dt (mm)
Ht: tire section height (mm)
Wt: cross-sectional width of tire (mm)

9. Aspect ratio

Aspect ratio is the ratio of the section height to the tire section width, and it is considered that the larger this ratio, the easier it is for the tread portion and the side portions to absorb the impact, and the easier it is to improve the chipping resistance performance. On the other hand, if the aspect ratio is too high, the amount of deflection at the side portions will be too large, which may lead to deterioration in steering stability performance.

Considering these points, the specific aspect ratio of the tire according to the present invention is preferably 40% or more. Moreover, it is preferably 80% or less as the upper limit.

In addition, the ratio of the silica content (parts by mass) with respect to 100 parts by mass of the rubber component to the aspect ratio is preferably 1.51 or less, more preferably 1.46 or less, further preferably 1.23 or less, and further preferably 1.20 or less. Although the lower limit is not particularly limited, it is preferably 0.35 or more, more preferably 0.92 or more, and further preferably 1.08 or more. As a result, it is possible to suppress the generation of cracks due to the concentration of force on the silica portion inside the rubber, and to further improve the chipping resistance performance by cooperating with the effect of the silica network.

Note that the above aspect ratio (%) can be obtained by the following formula based on the cross-sectional height Ht (mm), the cross-sectional width Wt (mm), the tire outer diameter Dt (mm), and the rim diameter R (mm) when the internal pressure is 250 kPa.

$$\text{Aspect ratio } (\%) = (Ht/Wt) \times 100\ (\%)$$

$$Ht = (Dt - R) / 2$$

[3] Embodiment

The present invention will be specifically described below based on embodiments.

1. Rubber composition forming cap rubber layer

In the tire according to the present invention, the rubber composition forming the cap rubber layer can be obtained by appropriately adjusting the type and amount of various compounding materials such as rubber components, fillers, plasticizers, vulcanizing agents, and vulcanization accelerators described below.

(1) Compounding material

(a) Rubber component

In the present invention, as the rubber component of the rubber composition forming the cap rubber layer, as described above, styrene-butadiene rubber (SBR) and isoprene rubber are used from the viewpoint of mixing micro layers with different hardness in the rubber phase.

(a-1) SBR

The weight average molecular weight of SBR is, for example, more than 100,000 and less than 2,000,000. Further, in the present invention, as described above, the amount of styrene in the SBR component is set to 20% by mass or less. The vinyl content (1,2-bonded butadiene content) of SBR is, for example, more than 5% by mass and less than 70% by mass. The vinyl content of SBR refers to the content of 1,2-bonded butadiene with respect to the entire butadiene portion in the SBR component. The structural identification of SBR (measurement of styrene content and vinyl content) can be performed using, for example, JNM-ECA series equipment manufactured by JEOL Ltd.

In the present invention, the content of SBR in 100 parts by mass of the rubber component is, as described above, 40 parts by mass or more and 60 parts by mass or less, and more preferably 50 parts by mass or more.

The SBR is not particularly limited, and for example, emulsion-polymerized styrene-butadiene rubber (E-SBR), solution-polymerized styrene-butadiene rubber (S-SBR) and the like can be used. The SBR may be either a non-modified SBR or a modified SBR. In addition, hydrogenated SBR obtained by hydrogenating the butadiene portion of SBR may be used. Hydrogenated SBR may be obtained by subsequently hydrogenating the BR portion of SBR. Styrene, ethylene and butadiene may be copolymerized to give similar structures.

The modified SBR may be any SBR having a functional group that interacts with a filler such as silica. Examples

thereof include

end-modified SBR (end-modified SBR having the above functional group at the terminal) in which at least one end of the SBR is modified with a compound having the above functional group (modifying agent),
main chain modified SBR having the functional group in the main chain,
main chain terminal modified SBR having the functional group at the main chain and the terminal (for example, a SBR having the above functional group to the main chain and having at least one end modified with the above modifying agent), and
end-modified SBR which is modified (coupled) with a polyfunctional compound having two or more epoxy groups in the molecule, and into which an epoxy group or hydroxyl group has been introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. In addition, these functional groups may have a substituent.
As modified SBR, for example, SBR modified with a compound (modifying agent) represented by the following formula can be used.

[Chemical 1]

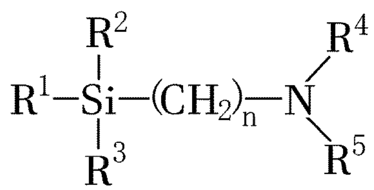

In the formula, $R^1$, $R^2$ and $R^3$ are the same or different and represent alkyl group, alkoxy group, silyloxy group, acetal group, carboxyl group (-COOH), mercapto group (-SH) or derivatives thereof. $R^4$ and $R^5$ are the same or different and represent hydrogen atoms or alkyl group. $R^4$ and $R^5$ may be combined to form a ring structure with nitrogen atoms. n represents an integer.
As the modified SBR modified by the compound (modifying agent) represented by the above formula, SBR, in which the polymerization end (active end) of the solution-polymerized styrene-butadiene rubber (S-SBR) is modified by the compound represented by the above formula (for example, modified SBR described in JP-A-2010-111753), can be used.
As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable. n is preferably 1 to 5, more preferably 2 to 4, and even more preferably 3. Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).
Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.
Further, as the modified SBR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;

diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3-(trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3-(methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;
N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as methyl-2-piperidone, N-vinyl-2-piperidone, and N-phenyl-2-piperidone;
N-substituted lactams such as
N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method.

As the SBR, for example, SBR manufactured and sold by Sumitomo Chemical Co., Ltd., JSR Corporation, Asahi Kasei Co., Ltd., Zeon Co., Ltd., etc. can be used. The SBR may be used alone or in combination of two or more.
Moreover, styrene-based polymers other than SBR, such as styrene-butadiene-styrene block copolymer (SBS) and styrene-butadiene block copolymer (SB), may be contained.

(a-2) Isoprene rubber

The present invention further contains an isoprene-based rubber. The content of the isoprene-based rubber in 100 parts by mass of the rubber component is, as described above, 30 parts by mass or less, preferably 15 parts by mass or more and 25 parts by mass or less.
Examples of the isoprene rubber include natural rubber (NR), isoprene rubber (IR), reformed NR, modified NR, and modified IR.
As the NR, for example, SIR20, RSS # 3, TSR20, SVR-L and the like, which are commonly used in the tire industry, can be used. The IR is not particularly limited, and for example, IR 2200 or the like, which is commonly used in the tire industry, can be used. Reformed NR includes deproteinized natural rubber (DPNR), high-purity natural rubber (UPNR), etc., and modified NR includes epoxidized natural rubber (ENR), hydrogenated natural rubber (HNR), grafted natural rubber, etc. Examples of the modified IR include epoxidized isoprene rubber, hydrogenated isoprene rubber, and grafted isoprene rubber. These may be used alone or in combination of two or more.

(a-3) BR

In the present invention, it is preferred that BR is further contained as necessary. In this case, the content of BR in 100 parts by mass of the rubber component is preferably 15 parts by mass or more and 25 parts by mass or less, as described above.

The weight average molecular weight of BR is, for example, more than 100,000 and less than 2,000,000. The vinyl bond amount of BR is, for example, more than 1% by mass and less than 30% by mass. The cis content of BR is, for example, more than 1% by mass and less than 98% by mass. The trans content of BR is, for example, more than 1% by mass and less than 60% by mass.

The BR is not particularly limited, and BR having a high cis content (cis content of 90% or more), BR having a low cis content, BR containing syndiotactic polybutadiene crystals, and the like can be used. The BR may be either a non-modified BR or a modified BR, and examples of the modified BR include a modified BR into which the above-mentioned functional group has been introduced. These may be used alone or in combination of two or more. The cis content can be measured by infrared absorption spectrum analysis.

As BR, for example, products of Ube Industries, Ltd., JSR Corporation, Asahi Kasei Co., Ltd., Nippon Zeon Co., Ltd., etc. can be used.

(a-4) Other rubber components

Further, as other rubber components, rubbers (polymers) generally used for manufacturing tires, such as nitrile rubber (NBR), may be contained, if necessary. Further, when using the SBR, isoprene-based rubber, BR and other rubber components, an expanded rubber that has been previously expanded with a plasticizer component such as oil, resin or liquid rubber described later may be used.

(b) Compounding materials other than rubber components

(b-1) Filler

In the present invention, the rubber composition contains silica as a filler as described above, but may contain other fillers. Examples of specific fillers other than silica include carbon black, graphite, calcium carbonate, talc, alumina, clay, aluminum hydroxide, mica, and biochar (BIO CHAR).

(i-1) Silica

In the present invention, the content of silica is 100 parts by mass or less with respect to 100 parts by mass of the rubber component, but as described above, it is more preferably 80 parts by mass or less, and further preferably 70 parts by mass or less. As the lower limit, it is preferably 50 parts by mass or more, and more preferably 60 parts by mass or more.

In the present invention, the BET specific surface area of silica contained in the rubber composition is preferably more than 140 $m^2$/g, more preferably more than 160 $m^2$/g, and further preferably more than 180 $m^2$/g (fine particle silica), from the viewpoint of obtaining good durability performance. On the other hand, it is preferably less than 300 $m^2$/g from the viewpoint of obtaining good rolling resistance during high-speed running. The BET specific surface area is the value of $N_2SA$ measured by the BET method according to ASTM D3037-93.

In the present invention, as described above, it is preferable to use silica having a particle size of 18 nm or less for the rubber composition. By using silica having a small particle size, the frequency of contact with the polymer (styrene domain) is raised and the reinforcing property can be improved. Although the lower limit is not particularly limited, it is preferably 10 nm or more from the viewpoint of dispersibility during mixing.

Examples of silica include dry silica (anhydrous silica) and wet silica (hydrous silica). Among them, wet silica is preferable because it has many silanol groups. Silica made from water-containing glass or the like, or silica made from biomass materials such as rice husks may also be used.

As the silica, products of Evonik Industries, Rhodia Co., Ltd., Tosoh Silica Co., Ltd., Solvay Japan Co., Ltd., and Tokuyama Co., Ltd., etc. can be used.

(i-2) silane coupling agent

The rubber composition of the present invention preferably contains a silane coupling agent together with silica.

The silane coupling agent is not particularly limited, and examples thereof include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as γ-glycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane, and 3-chloropropyltriethoxysilane. These may be used alone or in combination of two or more.

As the silane coupling agent, for example, products of Evonik Industries, Momentive Co., Ltd., Shin-Etsu Silicone Co., Ltd., Tokyo Chemical Industry Co., Ltd., Azumax Co., Ltd., Toray Dow Corning Co., Ltd., etc. can be used.

The content of the silane coupling agent is, for example, more than 3 parts by mass and less than 25 parts by mass with respect to 100 parts by mass of silica.

(ii) Carbon black

In the present invention, the rubber composition preferably contains carbon black from the viewpoint of reinforcing properties.

Specific content of carbon black with respect to 100 parts by mass of the rubber component is preferably 5 parts by mass or more, and more preferably 8 parts by mass or more. On the other hand, it is preferably 15 parts by mass or less, and more preferably 12 parts by mass or less.

Carbon black is not particularly limited, and examples thereof include furnace black (furnace carbon black) such as SAF, ISAF, HAF, MAF, FEF, SRF, GPF, APF, FF, CF, SCF and ECF; acetylene black (acetylene carbon black); thermal blacks (thermal carbon blacks) such as FT and MT; channel blacks (channel carbon blacks) such as EPC, MPC and CC. They may be used individually by 1 type, and may use 2 or more types together.

CTAB (Cetyl Tri-methyl Ammonium Bromide) specific surface area of carbon black is preferably 130 m2/g or more, more preferably 160 m2/g or more, and further preferably 170 m2/g or more. On the other hand, it is preferably 250 m2/g or less, and more preferably 200 m2/g or less. The CTAB specific surface area is a value measured according to ASTM D3765-92.

Specific carbon black is not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(iii) Other fillers

The rubber composition may further contain fillers such as graphite, calcium carbonate, talc, alumina, clay, aluminum hydroxide, and mica, which are generally used in the tire industry, in addition to the above-mentioned silica and carbon black, as necessary. These contents are, for example, more than 0.1 part by mass and less than 200 parts by mass with respect to 100 parts by mass of the rubber component.

(b-2) Plasticizer component

The rubber composition may contain oil, liquid rubber, and resin as plasticizer components as components for softening rubber. The plasticizer component is a component that can be extracted with acetone from the vulcanized rubber. The total content of the plasticizer component is preferably 15 parts by mass or more, more preferably 17 parts by mass or more, and further preferably 20 parts by mass or more with respect to 100 parts by mass of the rubber component. On the other hand, it is preferably 30 parts by mass or less, more preferably 27 parts by mass or less, and further preferably 25 parts by mass or less. These plasticizer components also include the plasticizer components in the extensible rubber. For example, when the rubber component described above is an oil-extended rubber component, the amount of the oil-extended oil is included in the oil content.

(i) Oil

Examples of the oil include mineral oils (commonly referred to as process oils), vegetable oils, or mixtures thereof. As the mineral oil (process oil), for example, a paraffinic process oil, an aroma-based process oil, a naphthene process oil, or the like can be used. Examples of the vegetable oils and fats include castor oil, cottonseed oil, linseed oil, rapeseed oil, soybean oil, palm oil, coconut oil, peanut oil, rosin, pine oil, pine tar, tall oil, corn oil, rice oil, beni-flower oil, sesame oil, olive oil, sunflower oil, palm kernel oil, camellia oil, jojoba oil, macadamia nut oil, and tung oil.

In addition, it is also possible to use a process oil with a low polycyclic aromatic compound (PCA) content for environmental protection. The low PCA content process oils include mild extractive solvates (MES), treated distillate aromatic extracts (TDAE), heavy naphthenic oils, and the like.

These may be used alone or in combination of two or more. Moreover, from the viewpoint of life cycle assessment, waste oil after being used as a lubricating oil for mixers for rubber mixing, automobile engines, etc., waste cooking oil, etc. may be used as appropriate.

Specific examples of process oil (mineral oil) include products of Idemitsu Kosan Co., Ltd., Sankyo Yuka Kogyo Co., Ltd., ENEOS Corporation, Olisoy Co., Ltd., H&R Co., Ltd., Toyokuni Seiyu Co., Ltd., Showa Shell Sekiyu Co., Ltd., and Fuji Kosan Co., Ltd.

(ii) Liquid rubber

The liquid rubber mentioned as a plasticizer is a polymer that is in a liquid state at room temperature (25°C), and is a rubber component that can be extracted from a vulcanized tire by acetone extraction. Examples of liquid rubbers include farnesene-based polymers, liquid diene-based polymers, and hydrogenated products thereof.

The farnesene-based polymer is a polymer obtained by polymerizing farnesene, and has a structural unit based on farnesene. Farnesene includes isomers such as $\alpha$-farnesene ((3E, 7E) -3,7,11-trimethyl-1,3,6,10-dodecatetraene) and $\beta$-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-converted weight average molecular weight (Mw) measured by gel permeation chromatography (GPC) of, for example, more than $1.0 \times 10^3$ and less than $2.0 \times 10^5$. In the present specification, Mw of the liquid diene polymer is a polystyrene conversion value measured by gel permeation chromatography (GPC).

The content of the liquid rubber (the total content of the liquid farnesene-based polymer, the liquid diene-based polymer, etc.) is, for example, more than 1 part by mass and less than 100 parts by mass with respect to 100 parts by mass of the rubber component.

As the liquid rubber, for example, products of Kuraray Co., Ltd. and Clay Valley Co., Ltd. can be used.

(iii) Resin component

The resin component also functions as a tackifying component and may be solid or liquid at room temperature. Specific examples of the resin components include rosin-based resin, styrene-based resin, coumarone-based resin, terpene-based resin, C5 resin, C9 resin, C5C9 resin, and acrylic resins. Two or more of them may be used in combination. Content of the resin component is more than 2 parts by mass, preferably less than 45 parts by mass, and more preferably less than 30 parts by mass with respect to 100 parts by mass of the rubber component. These resin components may optionally be provided with modified groups capable of reacting with silica

The rosin-based resin is a resin whose main component is rosin acid obtained by processing rosin. The rosin-based resins (rosins) can be classified according to the presence or absence of modification, and can be classified into unmodified rosin (non-modified rosin) and modified rosin (rosin derivative). Unmodified rosins include tall rosin (also known as tall oil rosin), gum rosin, wood rosin, disproportionated rosin, polymerized rosin, hydrogenated rosin, and other chemically modified rosins. The modified rosin is a modified compound of a unmodified rosin, and examples thereof include rosin esters, unsaturated carboxylic acid-modified rosins, unsaturated carboxylic acid-modified rosin esters, rosin amide compounds, and rosin amine salts.

The styrene-based resin is a polymer using a styrene-based monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, $\alpha$-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more styrene

monomers, and, in addition, copolymers obtained by copolymerizing a styrene monomer and other monomers that can be copolymerized with the styrene monomer.

Examples of the other monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; and α, β-unsaturated carboxylic acids such as maleic anhydride and acid anhydrides thereof.

As the coumarone-based resin, coumarone-indene resin is preferably used. Coumarone-indene resin is a resin containing coumarone and indene as monomer components constituting the skeleton (main chain) of the resin. Examples of the monomer component contained in the skeleton other than coumarone and indene include styrene, α-methylstyrene, methylindene, and vinyltoluene.

Content of the coumarone-indene resin is, for example, more than 1.0 part by mass and less than 50.0 parts by mass with respect to 100 parts by mass of the rubber component.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene-based resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)$ n or an oxygen-containing derivative thereof, which is a compound having a terpene classified as monoterpenes $(C_{10}H_{16})$, sesquiterpenes $(C_{15}H_{24})$, diterpenes $(C_{20}H_{32})$, etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and formalin can be mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating the above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone; and indene.

The "C5 resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5 based petroleum resin, a dicyclopentadiene resin (DCPD resin) is preferably used.

The "C9 resin" refers to a resin obtained by polymerizing a C9 fraction, which may be hydrogenated or modified. Examples of the C9 fraction include petroleum fractions having 8 to 10 carbon atoms such as vinyltoluene, alkylstyrene, indene, and methyl indene. As specific examples thereof, a coumaron indene resin, a coumaron resin, an indene resin, and an aromatic vinyl resin are preferably used. As the aromatic vinyl resin, a homopolymer of α -methylstyrene or styrene or a copolymer of α - methylstyrene and styrene is preferable because it is economical, easy to process, and excellent in heat generation. A copolymer of α -methylstyrene and styrene is more preferred. As the aromatic vinyl-based resin, for example, those commercially available from Kraton, Eastman Chemical, etc. can be used.

The "C5-C9 resin" refers to a resin obtained by copolymerizing the C5 fraction and the C9 fraction, which may be hydrogenated or modified. Examples of the C5 fraction and the C9 fraction include the above-mentioned petroleum fraction. As the C5-C9 resin, for example, those commercially available from Tosoh Corporation, LUHUA, etc. can be used.

Although the acrylic resin is not particularly limited, for example, a non-solvent type acrylic resin can be used.

As the solvent-free acrylic resin, a (meth) acrylic resin (polymer) synthesized by a high-temperature continuous polymerization method (high-temperature continuous lump polymerization method (a method described in US 4414370 B, JP 84-6207 A, JP 93-58805 B, JP 89-313522 A, US 5010166 B, Toa Synthetic Research Annual Report TREND2000 No. 3 p42-45, and the like) without using polymerization initiators, chain transfer agents, organic solvents, etc. as auxiliary raw materials as much as possible, can be mentioned. In the present disclosure, (meth) acrylic means methacrylic and acrylic.

Examples of the monomer component constituting the acrylic resin include (meth) acrylic acid, and (meth) acrylic acid derivatives such as (meth) acrylic acid ester (alkyl ester, aryl ester, aralkyl ester, etc.), (meth) acrylamide, and (meth) acrylamide derivative.

In addition, as the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth) acrylic acid or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol group, or the like.

As the resin component, for example, a product of Maruzen Petrochemical Co., Ltd., Sumitomo Bakelite Co., Ltd., Yasuhara Chemical Co., Ltd., Toso Co., Ltd., Rutgers Chemicals Co., Ltd., BASF Co., Ltd., Arizona Chemical Co., Ltd., Nitto Chemical Co., Ltd., Co., Ltd., Nippon Catalyst Co., Ltd., JX Energy Co., Ltd., Arakawa Chemical Industry Co., Ltd., Taoka Chemical Industry Co., Ltd. can be used.

(b-3) Stearic acid

In the present invention, the rubber composition preferably contains stearic acid. Content of stearic acid is, for example, more than 0.5 parts by mass and less than 10.0 parts by mass with respect to 100 parts by mass of the rubber component. As the stearic acid, conventionally known ones can be used, and, for example, products of NOF Corporation, Kao Corporation, Fuji film Wako Pure Chemical Industries, Ltd., and Chiba Fatty Acid Co., Ltd., etc. can be used.

(b-4) Anti-aging agent

In the present invention, the rubber composition preferably contains an antioxidant. The content of the anti-aging agent is, for example, more than 0.5 parts by mass and less than 10 parts by mass, and more preferably 1 part by mass or more with respect to 100 parts by mass of the rubber component.

Examples of the antiaging agent include naphthylamine-based antiaging agents such as phenyl-α-naphthylamine; diphenylamine-based antiaging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol; bis, tris, polyphenolic anti-aging agents such as tetrakis-[methylene-3-(3',5'-di-t-butyl-4'-hydroxyphenyl)propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(b-5) Wax

In the present invention, the rubber composition preferably contains wax. Content of the wax is, for example, 0.5 to 20 parts by mass, preferably 1.0 to 15 parts by mass, and more preferably 1.5 to 10 parts by mass with respect to 100 parts by mass of the rubber component.

The wax is not particularly limited, and examples thereof include petroleum waxes such as paraffin wax and microcrystalline wax; natural waxes such as plant waxes and animal waxes; synthetic waxes such as polymers of ethylene and propylene. These may be used alone or in combination of two or more.

As the wax, for example, products of Ouchi Shinko Chemical Industry Co., Ltd., Nippon Seiro Co., Ltd., Seiko Chemical Co., Ltd., etc. can be used.

(b-6) Zinc oxide

The rubber composition may contain zinc oxide. Content of the zinc oxide is, for example, more than 0.5 parts by mass and less than 10 parts by mass with respect to 100 parts by mass of the rubber component. As the zinc oxide, conventionally known ones can be used, for example, products of Mitsui Mining & Smelting Co., Ltd., Toho Zinc Co., Ltd., Hakusui Tech Co., Ltd., Shodo Chemical Industry Co., Ltd., Sakai Chemical Industry Co., Ltd., etc. can be used.

(b-7) Cross-linking agent and vulcanization accelerator

The rubber composition preferably contains a cross-linking agent such as sulfur. Content of the cross-linking agent is, for example, more than 0.1 parts by mass and less than 10.0 parts by mass with respect to 100 parts by mass of

the rubber component.

Examples of sulfur include powdered sulfur, precipitated sulfur, colloidal sulfur, insoluble sulfur, highly dispersible sulfur, and soluble sulfur, which are commonly used in the rubber industry. These may be used alone or in combination of two or more.

As the sulfur, for example, products of Tsurumi Chemical Industry Co., Ltd., Karuizawa Sulfur Co., Ltd., Shikoku Chemicals Corporation, Flexsys Co., Ltd., Nippon Kanryu Kogyo Co., Ltd., Hosoi Chemical Industry Co., Ltd., etc. can be used.

Examples of the cross-linking agent other than sulfur include vulcanizing agents containing a sulfur atom such as Tackirol V200 manufactured by Taoka Chemical Industry Co., Ltd., and KA9188 (1,6-bis (N, N'-dibenzylthiocarbamoyldithio) hexane) manufactured by Lanxess; and organic peroxides such as dicumyl peroxide.

The rubber composition preferably contains a vulcanization accelerator. The content of the vulcanization accelerator is, for example, more than 0.3 parts by mass and less than 10.0 parts by mass with respect to 100 parts by mass of the rubber component.

Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;

thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);

sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, and N,N'-diisopropyl-2-benzothiazolesulfenamide; and

guanidine-based vulcanization accelerators such as diphenylguanidine, di-ortho-tolylguanidine and ortho-tolylbiguanidine. These may be used alone or in combination of two or more.

(b-8) Others

In addition to the above components, the rubber composition may contain additives commonly used in the tire industry, such as fatty acid metal salts, carboxylic acid metal salts, organic peroxides, anti-reversion agents may be further contained, if desired. Content of these additives is, for example, more than 0.1 parts by mass and less than 200 parts by mass with respect to 100 parts by mass of the rubber component.

(2) Production of rubber composition for forming cap rubber layer

The rubber composition for forming the cap rubber layer is prepared by appropriately adjusting the various compounding materials described above and performing a general method, for example, a manufacturing method having a base kneading step of kneading a rubber component and a filler such as carbon black, and a finish kneading step of kneading the kneaded product obtained in the base kneading step and a cross-linking agent.

Kneading can be performed using a known (closed) kneader such as a Banbury mixer, kneader, and open roll.

The kneading temperature in the base kneading step is, for example, more than 50°C and less than 200°C, and the kneading time is, for example, more than 30 seconds and less than 30 minutes. In the base kneading process, in addition to the above components, compounding agents conventionally used in the rubber industry, such as softeners such as oils, zinc oxide, antiaging agents, waxes, and vulcanization accelerators, may be appropriately added and kneaded as desired.

In the finish kneading step, the kneaded material obtained in the base kneading step and a cross-linking agent are kneaded. The kneading temperature in the finish kneading step is, for example, higher than room temperature and lower than 80°C, and the kneading time is, for example, more than 1 minute and less than 15 minutes. In the finish kneading step, in addition to the above components, a vulcanization accelerator, zinc oxide, and the like may be appropriately added and kneaded as desired.

2. Rubber composition for forming base rubber layer

In the tire according to the present invention, the rubber composition forming the base rubber layer is produced by a manufacturing method including a base kneading step and a finishing kneading step, using various compounding materials basically the same as the rubber composition for forming the cap rubber layer described above, except that an isoprene-based rubber and BR are used as rubber components, and appropriately adjusting the types and amounts thereof.

3. Manufacture of tires

The tire according to the present invention can be produced as an unvulcanized tire by forming a tread rubber having a predetermined shape using the rubber composition for forming the cap rubber layer and the rubber composition for forming the base rubber layer, obtained above, and then forming the tire together with other tire members by an ordinary method on a tire molding machine.

Specifically, on the molded drum, the inner liner as a member to ensure the airtightness of the tire, the carcass as a member to withstand the load, impact, and filling air pressure received by the tire, a belt member as a member to strongly tighten the carcass to increase the rigidity of the tread, and the like are wound, both ends of the carcass are fixed to both side edges, a bead part as a member for fixing the tire to the rim is arranged, and they are formed into a toroid shape. Then the tread is pasted on the center of the outer circumference, and the sidewall is pasted on the radial outer side to form the side portion. Thus, an unvulcanized tire is produced.

Then, the produced unvulcanized tire is heated and pressed in a vulcanizer to obtain a tire. The vulcanization step can be carried out by applying a known vulcanization means. The vulcanization temperature is, for example, higher than 120 °C and lower than 200 °C, and the vulcanization time is, for example, more than 5 minutes or and less than 15 minutes

As described above, the resulting tire can exhibit sufficient chipping resistance performance due to the cooperation of the effect of suppressing impacts and propagation of cracks from the tire surface by setting the thickness ratio of the cap rubber layer and the base rubber layer provided at the tread portion to an appropriate thickness ratio; in addition to the effect of suppressing impacts and propagation of cracks from the tire surface by containing low styrene SBR, isoprene rubber and silica; the rubber reinforcement effect by silica; and the effect of suppressing the deterioration of fracture characteristics due to the temperature rise by the low 30°C tan $\delta$.

The tire according to the present invention is not particularly limited in category, and can be used as a tire for passenger cars, a tire for heavy-duty vehicles such as trucks and buses, a tire for motorcycle, a run-flat tire, a non-pneumatic tire, and the like. However, it is preferable to use a tire for a passenger car, and moreover, it is preferable to use as a pneumatic tire.

[Example]

Example 8 is according to the present invention. Examples 1 to 7 and 9 to 18 are not according to the present invention but are useful for understanding the present invention. In the examples, passenger car tires (tire size 215/65R17 (Aspect ratio: 65%, Land ratio: 68%)) made from compositions obtained by using various chemicals shown below and changing the formulation according to each table were evaluated and the evaluation results obtained and calculated based on the following evaluation methods are shown in Tables 2 to 5.

1. Rubber composition forming cap rubber layer

(1) Compounding material

(a) Rubber component

(a-1) NR: TSR20
(a-2) SBR-1: HPR840 (S-SBR) manufactured by JSR Corporation (Styrene content: 10% by mass, vinyl content: 42% by mass)
(a-3) SBR-2: Modified S-SBR obtained by the method shown in the next paragraph (Styrene content: 25% by mass, vinyl content: 25% by mass)
(a-4) BR: Nipol BR1220 (High cis BR) manufactured by Nippon Zeon Co., Ltd. (Cis content 97% by mass, trans content 2% by mass, vinyl content 1% by mass)

(Manufacture of SBR-2)

The above SBR-2 is produced according to the following procedure. First, two autoclaves having an internal volume of 10 L, having an inlet at the bottom and an outlet at the top, equipped with a stirrer and a jacket, were connected in series as reactors. Butadiene, styrene, and cyclohexane were each mixed in a predetermined ratio. This mixed solution is passed through a dehydration column filled with activated alumina, mixed with n-butyllithium in a static mixer to remove impurities. Then, it is continuously supplied from the bottom of the first reactor, further 2,2-bis(2-oxolanyl) propane as a polar substance and n-butyllithium as a polymerization initiator are continuously supplied at a predetermined rate from the

bottom of the first reactor, and the internal temperature of the reactor is kept at 95°C. The polymer solution is continuously withdrawn from the top of the first reactor and supplied to the second reactor. The temperature of the second reactor is kept at 95°C, and a mixture of tetraglycidyl-1,3-bisaminomethylcyclohexane (monomer) as a modifier and an oligomer component is continuously added, as a 1000-fold dilution of cyclohexane, at a predetermined rate to carry out the denaturation reaction. This polymer solution is continuously withdrawn from the reactor, an antioxidant is added continuously by a static mixer, and the solvent is removed to obtain the desired modified diene polymer (SBR-2).

The vinyl content (unit: mass%) of the SBR-2 is determined by infrared spectroscopy from the absorption intensity near 910 $cm^{-1}$, which is the absorption peak of the vinyl group. Also, the styrene content (unit: % by mass) is determined from the refractive index according to JIS K6383: 1995).

(b) Compounding materials other than rubber components

(b-1) Carbon black: VULCAN10H manufactured by Cabot Japan Co., Ltd. (N134, $N_2SA$: 144$m^2/g$)
(b-2) Silica: Ultrasil VN3 manufactured by Evonik Industries
($N_2SA$: 175 $m^2/g$, Average primary particle size: 18 nm)
(b-3) Silane coupling agent: Si266 manufactured by Evonik Industries
(bis (3-triethoxysilylpropyl) disulfide)
(b-4) Oil: VIVATEC400 (TDAE oil) manufactured by H&R
(b-5) Wax: Ozoace 0355 (special paraffin wax) manufactured by Nippon Seiro Co., Ltd.
(b-6) Antiaging agent: Antigen 6C manufactured by Sumitomo Chemical Co., Ltd. (N-(1,3-dimethylbutyl)-N'-phenyl-p-phenylenediamine)
(b-7) Stearic acid: bead stearic acid "Tsubaki" manufactured by NOF Corporation
(b-8) Zinc oxide: zinc oxide No. 1 manufactured by Mitsui Mining & Smelting Co., Ltd.
(b-9) Sulfur: powdered sulfur manufactured by Karuizawa Sulfur Co., Ltd.
(b-10) Vulcanization accelerator-1: Nocceler CZ manufactured by Ouchi Shinko Chemical Industry Co., Ltd. (N-cyclohexyl-2-benzothiazolylphenamide (CBS))
(b-11) Vulcanization accelerator-2: Noccellar D manufactured by Ouchi Shinko Chemical Industry Co., Ltd. (N,N'-diphenylguanidine)

(2) Production of rubber composition forming cap rubber layer

Using a Banbury mixer, materials other than sulfur and a vulcanization accelerator are kneaded at 150°C for 5 minutes according to the formulation contents shown in Tables 2 to 5 to obtain a kneaded product. Each compounding quantity is a mass part.

Next, sulfur and a vulcanization accelerator are added to the resulting kneaded product, and the mixture is kneaded at 80°C for 5 minutes using an open roll to obtain a rubber composition forming a cap rubber layer.

2. Manufacture of rubber composition forming base rubber layer

In parallel, a rubber composition for forming the base rubber layer is obtained based on the formulation shown in Table 1 according to the same manner as the rubber composition for forming the cap rubber layer.

[Table 1]

| Compounding material | Compounding amount (parts by mass) |
|---|---|
| NR (TSR20) | 70 |
| BR (UBEPOL-BR150B manufactured by Ube Industries, Ltd.) | 30 |
| Carbon black (Show Black N330T manufactured by Cabot Japan Co., Ltd.) | 35 |
| Stearic acid ("Tsubaki" stearic acid manufactured by NOF Corporation) | 2 |
| Zinc oxide (zinc white No. 1 manufactured by Mitsui Mining & Smelting Co., Ltd.) | 4 |
| Wax (Sannok wax manufactured by Ouchi Shinko Chemical Co., Ltd.) | 2 |

(continued)

| Compounding material | Compounding amount (parts by mass) |
|---|---|
| Antiaging agent (Nocrac 6C manufactured by Ouchi Shinko Chemical Co., Ltd.) | 3 |
| Antiaging agent (Antage RD manufactured by Kawaguchi Chemical Industry Co., Ltd.) | 1 |
| Sulfur (powder sulfur manufactured by Tsurumi Chemical Industry Co., Ltd.) | 1.7 |
| Vulcanization accelerator (Nocceler CZ-G manufactured by Ouchi Shinko Chemical Industry Co., Ltd.) | 1.2 |

3. Passenger car tires

A tread portion having a total thickness of G (mm) shown in Tables 2 to 5 is formed by extruding each rubber composition into a predetermined shape so that the ratio (thickness of cap rubber layer / thickness of base rubber layer) becomes the ratio shown in Tables 2 to 5.

After that, it is pasted together with other tire members to form an unvulcanized tire, and then it is press-vulcanized for 10 minutes at 170°C to produce each passenger car tire (test tire) for Examples 1 to 18 and Comparative Examples 1 to 7, shown in Tables 2 to 5.

4. Calculation of parameters

The following parameters are then determined for each test tire.

(1) Loss tangent (tan $\delta$)

From the cap rubber layer of the tread portion of each test tire, a rubber test piece for viscoelasticity measurement is prepared by cutting a size of length 20 mm $\times$ width 4 mm $\times$ thickness 2 mm so that the tire circumferential direction is the long side. For each rubber test piece, the loss tangents at 0°C and 30°C (0°C tan $\delta$ and 30°C tan $\delta$) are measured using Eplexor series manufactured by GABO under the conditions of frequency of 10Hz, initial strain of 5%, dynamic strain of 1%, and deformation mode: tensile. The 30°Ctan $\delta$ of the base rubber layer is 0.07.

Using the 0°C tan $\delta$ and 30°C tan $\delta$ of the cap rubber layer and the thickness G of the cap rubber layer, thus obtained, $\alpha$ (= 30°C tan $\delta \times$ G ) and $\beta$ (= 0°C tan $\delta \times$ G) are calculated.

(2) M100

A No. 7 dumbbell-shaped test piece with a thickness of 1 mm is prepared from a sample taken from the cap rubber layer of each test tire, and a tensile test is performed at 23°C in accordance with JIS K6251: 2010 to measure modulus at 100% elongation (M100: MPa).

(3) AE

Using a vulcanized rubber test piece cut out from the cap rubber layer of the tread portion of each test tire, AE (% by mass) is determined in accordance with JIS K 6229:2015.

(4) Other parameters

In addition, y (= styrene content in styrene- butadiene rubber (SBR) / G), (SBR content $\times$ Land ratio), and (Silica content / Aspect ratio) are calculated, based on the specifications of each test tire, the formulation content, and the thickness G of the cap rubber layer.

5. Performance evaluation (chipping resistance performance)

After installing each test tire on a standardized rim and filling the tire with air to the standardized internal pressure (250kPa), the tire is installed on all wheels of a test vehicle (displacement 2000cc, front-wheel drive vehicle) and let the test

vehicle run on an uneven ground at 50km/h for 4 hours. After that, the circumferential length of all the cracks generated on the tire surface is measured and the maximum value is obtained.

Next, taking the result in Comparative Example 6 as 100, it is indexed based on the following formula to evaluate the chipping resistance performance. A larger value indicates better chipping resistance performance.

$$\text{Chipping resistance performance} = [(\text{result of test tire}) / (\text{result of Comparative Example 6})] \times 100$$

[Table 2]

| Example No. | EXAMPLE | | | | | | |
|---|---|---|---|---|---|---|---|
| | 1 | 2 | 3 | 4 | 5 | 6 | 7 |
| Formulation of the cap rubber layer | | | | | | | |
| NR | 30 | 30 | 20 | 30 | 20 | 20 | 20 |
| SBR-1 | 12 | 2 | 12 | 2 | 12 | 12 | 12 |
| SBR-2 | 28 | 48 | 48 | 48 | 48 | 48 | 48 |
| BR | 30 | 20 | 20 | 20 | 20 | 20 | 20 |
| Carbon black | 10 | 10 | 10 | 10 | 10 | 10 | 10 |
| Silica | 95 | 95 | 95 | 60 | 70 | 60 | 80 |
| Silane coupling agent | 7.6 | 7.6 | 7.6 | 4.8 | 5.6 | 4.8 | 6.4 |
| Oil | 22 | 22 | 22 | 22 | 22 | 22 | 22 |
| Wax | 1.5 | 1.5 | 1.5 | 1.5 | 1.5 | 1.5 | 1.5 |
| Anti-aging agent | 2 | 2 | 2 | 2 | 2 | 2 | 2 |
| Stearic acid | 2 | 2 | 2 | 2 | 2 | 2 | 2 |
| Zinc oxide | 2 | 2 | 2 | 2 | 2 | 2 | 2 |
| Sulfur | 1.5 | 1.5 | 1.5 | 1.5 | 1.5 | 1.5 | 1.5 |
| Vulcanization accelerator-1 | 2.5 | 2.5 | 2.5 | 2.5 | 2.5 | 2.5 | 2.5 |
| Vulcanization accelerator-2 | 1 | 1 | 1 | 1 | 1 | 1 | 1 |
| Parameter | | | | | | | |
| total SBR content (parts by mass) | 40 | 50 | 60 | 50 | 60 | 60 | 60 |
| Styrene content in SBR (% by mass) | 20.5 | 24.4 | 22.0 | 24.4 | 22.0 | 22.0 | 22.0 |
| (Cap rubber thickness / Base rubber thickness) | 2.3 | 2.3 | 2.3 | 2.3 | 4.0 | 4.0 | 4.0 |
| Tread thickness G (mm) | 7 | 7 | 7 | 7 | 7 | 7 | 7 |
| 30°Ctan $\delta$ | 0.23 | 0.23 | 0.20 | 0.14 | 0.15 | 0.13 | 0.18 |
| 0°Ctan $\delta$ | 0.28 | 0.31 | 0.31 | 0.25 | 0.25 | 0.24 | 0.26 |
| $\alpha$ =30°Ctan $\delta \times$ G | 1.61 | 1.61 | 1.40 | 0.98 | 1.05 | 0.91 | 1.26 |
| $\beta$ =0°Ctan $\delta \times$ G | 1.96 | 2.17 | 2.17 | 1.75 | 1.75 | 1.68 | 1.82 |
| y = Styrene content in SBR / G | 2.9 | 3.5 | 3.1 | 3.5 | 3.1 | 3.1 | 3.1 |
| M100 (MPa) | 3.0 | 2.9 | 3.0 | 2.6 | 2.6 | 2.1 | 3.2 |
| AE (% by mass) | 10.9 | 12.6 | 12.5 | 14.1 | 14.0 | 14.8 | 13.4 |
| SBR content $\times$ Land ratio | 2720 | 3400 | 4080 | 3400 | 4080 | 4080 | 4080 |
| Silica content / Aspect ratio | 1.46 | 1.46 | 1.46 | 0.92 | 1.08 | 0.92 | 1.23 |

(continued)

| Performance evaluation | | | | | | | |
|---|---|---|---|---|---|---|---|
| Chipping resistance performance | 107 | 113 | 106 | 131 | 125 | 131 | 119 |

[Table 3]

| Example No. | EXAMPLE | | | | | | |
|---|---|---|---|---|---|---|---|
| | 8 | 9 | 10 | 11 | 12 | 13 | 14 |
| Formulation of the cap rubber layer | | | | | | | |
| NR | 20 | 30 | 30 | 30 | 30 | 30 | 30 |
| SBR-1 | 22 | 2 | 2 | 2 | 2 | 2 | 2 |
| SBR-2 | 38 | 48 | 48 | 48 | 48 | 48 | 48 |
| BR | 20 | 20 | 20 | 20 | 20 | 20 | 20 |
| Carbon black | 10 | 10 | 10 | 10 | 10 | 10 | 10 |
| Silica | 60 | 70 | 60 | 80 | 60 | 60 | 98 |
| Silane coupling agent | 4.8 | 5.6 | 4.8 | 6.4 | 4.8 | 4.8 | 7.8 |
| Oil | 22 | 22 | 22 | 22 | 22 | 22 | 22 |
| Wax | 1.5 | 1.5 | 1.5 | 1.5 | 1.5 | 1.5 | 1.5 |
| Anti-aging agent | 2 | 2 | 2 | 2 | 2 | 2 | 2 |
| Stearic acid | 2 | 2 | 2 | 2 | 2 | 2 | 2 |
| Zinc oxide | 2 | 2 | 2 | 2 | 2 | 2 | 2 |
| Sulfur | 1.5 | 1.5 | 1.5 | 1.5 | 1.5 | 1.5 | 1.5 |
| Vulcanization accelerator-1 | 2.5 | 2.5 | 2.5 | 2.5 | 2.5 | 2.5 | 2.5 |
| Vulcanization accelerator-2 | 1 | 1 | 1 | 1 | 1 | 1 | 1 |
| Parameter | | | | | | | |
| total SBR content (parts by mass) | 60 | 50 | 50 | 50 | 50 | 50 | 50 |
| Styrene content in SBR (% by mass) | 19.5 | 24.4 | 24.4 | 24.4 | 24.4 | 24.4 | 24.4 |
| (Cap rubber thickness / Base rubber thickness) | 4.0 | 4.0 | 4.0 | 4.0 | 9.0 | 9.0 | 9.0 |
| Tread thickness G (mm) | 7 | 7 | 7 | 7 | 7 | 6 | 7 |
| 30°Ctan $\delta$ | 0.15 | 0.16 | 0.14 | 0.19 | 0.14 | 0.14 | 0.24 |
| 0°Ctan $\delta$ | 0.25 | 0.26 | 0.25 | 0.27 | 0.25 | 0.25 | 0.3 |
| $\alpha$ =30°Ctan $\delta \times$ G | 1.05 | 1.12 | 0.98 | 1.33 | 0.98 | 0.84 | 1.65 |
| $\beta$ =0°Ctan $\delta \times$ G | 1.75 | 1.82 | 1.75 | 1.89 | 1.75 | 1.50 | 2.10 |
| $\gamma$ = Styrene content in SBR / G | 2.8 | 3.5 | 3.5 | 3.5 | 3.5 | 4.1 | 3.5 |
| M100 (MPa) | 2.2 | 2.6 | 2.1 | 3.1 | 2.6 | 2.6 | 3.2 |
| AE (% by mass) | 13.8 | 14.1 | 14.8 | 13.4 | 14.1 | 14.1 | 12.4 |
| SBR content $\times$ Land ratio | 4080 | 3400 | 3400 | 3400 | 3400 | 3400 | 3400 |
| Silica content / Aspect ratio | 0.92 | 1.08 | 0.92 | 1.23 | 0.92 | 0.92 | 1.51 |
| Performance evaluation | | | | | | | |
| Chipping resistance performance | 126 | 131 | 138 | 125 | 163 | 147 | 117 |

[Table 4]

| Example No. | EXAMPLE | | | |
|---|---|---|---|---|
| | 15 | 16 | 17 | 18 |
| Formulation of the cap rubber layer | | | | |
| NR | 30 | 30 | 30 | 30 |
| SBR-1 | 7 | 12 | 7 | 2 |
| SBR-2 | 48 | 48 | 38 | 38 |
| BR | 15 | 10 | 25 | 30 |
| Carbon black | 10 | 10 | 10 | 10 |
| Silica | 70 | 70 | 70 | 70 |
| Silane coupling agent | 5.6 | 5.6 | 5.6 | 5.6 |
| Oil | 22 | 22 | 22 | 22 |
| Wax | 1.5 | 1.5 | 1.5 | 1.5 |
| Anti-aging agent | 2 | 2 | 2 | 2 |
| Stearic acid | 2 | 2 | 2 | 2 |
| Zinc oxide | 2 | 2 | 2 | 2 |
| Sulfur | 1.5 | 1.5 | 1.5 | 1.5 |
| Vulcanization accelerator-1 | 2.5 | 2.5 | 2.5 | 2.5 |
| Vulcanization accelerator-2 | 1 | 1 | 1 | 1 |
| Parameter | | | | |
| total SBR content (parts by mass) | 55 | 60 | 45 | 40 |
| Styrene content in SBR (% by mass) | 23.1 | 22.0 | 22.7 | 24.3 |
| (Cap rubber thickness / Base rubber thickness) | 9.0 | 9.0 | 9.0 | 9.0 |
| Tread thickness G (mm) | 7 | 7 | 7 | 7 |
| 30°Ctan $\delta$ | 0.16 | 0.15 | 0.18 | 0.17 |
| 0°Ctan $\delta$ | 0.27 | 0.25 | 0.25 | 0.24 |
| $\alpha$ =30°Ctan $\delta \times$ G | 1.124 | 1.050 | 1.230 | 1.189 |
| $\beta$ =0°Ctan $\delta \times$ G | 1.857 | 1.766 | 1.766 | 1.680 |
| $\gamma$ = Styrene content in SBR / G | 3.3 | 3.1 | 3.2 | 3.5 |
| M100 (MPa) | 1.8 | 1.6 | 1.5 | 1.6 |
| AE (% by mass) | 14.1 | 14.2 | 14.2 | 14.1 |
| SBR content $\times$ Land ratio | 3740 | 4080 | 3060 | 2720 |
| Silica content / Aspect ratio | 1.08 | 1.08 | 1.08 | 1.08 |
| Performance evaluation | | | | |
| Chipping resistance performance | 128 | 130 | 120 | 118 |

[Table 5]

| Comparative example No. | COMPARATIVE EXAMPLE | | | | | | |
|---|---|---|---|---|---|---|---|
| | 1 | 2 | 3 | 4 | 5 | 6 | 7 |
| Formulation of the cap rubber layer | | | | | | | |
| NR | 40 | 40 | 40 | 30 | 35 | 40 | 40 |

(continued)

| Comparative example No. | COMPARATIVE EXAMPLE | | | | | | |
|---|---|---|---|---|---|---|---|
| | 1 | 2 | 3 | 4 | 5 | 6 | 7 |
| Formulation of the cap rubber layer | | | | | | | |
| SBR-1 | 19 | 24 | 19 | 19 | 25 | 19 | 0 |
| SBR-2 | 16 | 16 | 16 | 16 | 40 | 16 | 40 |
| BR | 25 | 20 | 25 | 35 | 0 | 25 | 20 |
| Carbon black | 10 | 10 | 10 | 10 | 10 | 10 | 10 |
| Silica | 110 | 110 | 95 | 110 | 105 | 110 | 110 |
| Silane coupling agent | 8.8 | 8.8 | 7.6 | 8.8 | 8.4 | 8.8 | 8.8 |
| Oil | 14 | 14 | 14 | 14 | 20 | 14 | 22 |
| Wax | 1.5 | 1.5 | 1.5 | 1.5 | 1.5 | 1.5 | 1.5 |
| Anti-aging agent | 2 | 2 | 2 | 2 | 2 | 2 | 2 |
| Stearic acid | 2 | 2 | 2 | 2 | 2 | 2 | 2 |
| Zinc oxide | 2 | 2 | 2 | 2 | 2 | 2 | 2 |
| Sulfur | 1.5 | 1.5 | 1.5 | 1.5 | 1.5 | 1.5 | 1.5 |
| Vulcanization accelerator-1 | 2.5 | 2.5 | 2.5 | 2.5 | 2.5 | 2.5 | 2.5 |
| Vulcanization accelerator-2 | 1 | 1 | 1 | 1 | 1 | 1 | 1 |
| Parameter | | | | | | | |
| total SBR content (parts by mass) | 35 | 40 | 35 | 35 | 65 | 35 | 40 |
| Styrene content in SBR (% by mass) | 16.9 | 16.0 | 16.9 | 16.9 | 19.2 | 16.9 | 25.0 |
| (Cap rubber thickness / Base rubber thickness) | 1.9 | 1.9 | 1.9 | 1.9 | 1.9 | 4.0 | 4.0 _ |
| Tread thickness G (mm) | 7 | 7 | 7 | 7 | 7 | 7 | 7 |
| 30°Ctan $\delta$ | 0.29 | 0.29 | 0.26 | 0.29 | 0.25 | 0.29 | 0.29 |
| 0°Ctan $\delta$ | 0.32 | 0.32 | 0.3 | 0.31 | 0.31 | 0.32 | 0.3 |
| $\alpha$ =30°Ctan $\delta \times$ G | 2.03 | 2.03 | 1.82 | 2.03 | 1.75 | 2.03 | 2.03 |
| $\beta$ =0°Ctan $\delta \times$ G | 2.24 | 2.24 | 2.10 | 2.17 | 2.17 | 2.24 | 2.10 |
| $\gamma$ = Styrene content in SBR / G | 2.4 | 2.3 | 2.4 | 2.4 | 2.7 | 2.4 | 3.6 |
| M100 (MPa) | 3.3 | 3.4 | 2.5 | 3.3 | 2.7 | 2.5 | 3.7 |
| AE (% by mass) | 9.2 | 9.2 | 9.8 | 9.3 | 11.4 | 14.2 | 11.9 |
| SBR content $\times$ Land ratio | 2380 | 2720 | 2380 | 2380 | 4420 | 2380 | 2720 |
| Silica content / Aspect ratio | 1.69 | 1.69 | 1.46 | 1.69 | 1.62 | 1.69 | 1.69 |
| Performance evaluation | | | | | | | |
| Chipping resistance performance | 75 | 81 | 88 | 81 | 81 | 100 | 80 |

Although the present invention has been described above based on the embodiments, the present invention is not limited to the above embodiments. Various modifications can be made to the above embodiment within the scope of the present invention as defined in the appended claims.

## Claims

**1.** A tire having a tread portion, wherein

the tread portion has a cap rubber layer and a base rubber layer provided radially inward of the cap rubber layer, the cap rubber layer

contains, as a rubber component, 40 parts by mass or more and 60 parts by mass or less of styrene-butadiene rubber (SBR) with a styrene content of 20% by mass or less, and 30 parts by mass or less of isoprene-based rubber, in 100 parts by mass of the rubber component, and,

as a filler, 100 parts by mass or less of silica with respect to 100 parts by mass of the rubber component; and is formed from a rubber composition having a loss tangent 30°C tan δ of 0.25 or less measured under conditions of temperature of 30°C, frequency of 10 Hz, initial strain of 5%, and dynamic strain rate of 1%, and deformation mode: tensile; and

the ratio of the thickness of the cap rubber layer to the thickness of the base rubber layer is 2.3 or more.

**2.** The tire according to claim 1 , wherein the content of silica is 80 parts by mass or less with respect to 100 parts by mass of the rubber component.

**3.** The tire according to claim 1 or 2, wherein the 30°C tan δ is 0.20 or less.

**4.** The tire according to claim 3, wherein the 30°C tan δ is 0.15 or less.

**5.** The tire according to any one of claims 1 to 4, wherein the ratio of the thickness of the cap rubber layer to the thickness of the base rubber layer is 4.0 or more.

**6.** The tire according to any one of claims 1 to 5, wherein α in the following formula (1) showing the relationship between the 30°C tan δ and the thickness G (mm) of the tread portion is 1.65 or less.

$$\alpha = 30°C \tan\delta \times G \qquad (1)$$

**7.** The tire according to any one of claims 1 to 6, wherein the loss tangent (0°C tan δ) of the rubber composition forming the cap rubber layer measured under conditions of a temperature of 0°C, a frequency of 10 Hz, an initial strain of 5%, a dynamic strain rate of 1%, and deformation mode: tensile is 0.30 or less.

**8.** The tire according to any one of claims 1 to 7, wherein β in the following formula (2), which indicates the product of the loss tangent 0°C tan δ measured under the conditions of a temperature of 0°C, a frequency of 10 Hz, an initial strain of 5%, a dynamic strain rate of 1%, and deformation mode: tensile and the thickness G (mm) of the tread portion, is 2.00 or less.

$$\beta = 0°C \tan\delta \times G \qquad (2)$$

**9.** The tire according to any one of claims 1 to 8, wherein γ in the following formula (3), which indicates the relationship between the styrene content (% by mass) in the styrene-butadiene rubber (SBR) and the thickness G (mm) of the tread portion, is 3.0 or more.

$$\gamma = \text{Styrene content in styrene-butadiene rubber (SBR)} / G \qquad (3)$$

**10.** The tire according to any one of claims 1 to 9, wherein the content of the butadiene rubber (BR) in 100 parts by mass of the rubber component is 15 parts by mass or more and 25 parts by mass or less.

**11.** The tire according to any one of claims 1 to 10, wherein the 100% modulus (M100) of the rubber composition constituting the cap rubber layer is 2.0 MPa or more.

**12.** The tire according to any one of claims 1 to 11, wherein the 30°C tan δ of the base rubber layer is smaller than the 30°C tan δ of the cap rubber layer.

**13.** The tire according to any one of claims 1 to 12, wherein the land ratio in the tread portion is 40% or more, and the product of the content (parts by mass) of the styrene-butadiene rubber (SBR) having a styrene content of 20% by mass or less in 100 parts by mass of the rubber component and the land ratio (%) in the tread portion (the SBR content × the land ratio) is 3000 or more.

14. The tire according to any one of claims 1 to 13, wherein the aspect ratio is 80 % or less, and the ratio of the silica content (parts by mass) with respect to 100 parts by mass of the rubber component to the aspect ratio (%) (the silica content / the aspect ratio) is 1.20 or less.

**Patentansprüche**

1. Reifen, der einen Laufstreifenabschnitt aufweist, wobei

   der Laufstreifenabschnitt eine Deckkautschukschicht und eine radial innerseits der Deckkautschukschicht vorgesehene Basiskautschukschicht aufweist,
   die Deckkautschukschicht
   enthält: als Kautschukkomponente 40 Massenteile oder mehr und 60 Massenteile oder weniger an Styrol-Butadien-Kautschuk (SBR) mit einem Styrolgehalt von 20 Massen-% oder weniger und 30 Massenteile oder weniger an Isopren-basiertem Kautschuk in 100 Massenteilen der Kautschukkomponente, und
   als Füllstoff 100 Massenteile oder weniger an Siliziumdioxid bezogen auf 100 Massenteile der Kautschukkomponente; und
   mit einer Kautschukzusammensetzung gebildet ist, die einen Verlusttangens 30°C tan $\delta$ von 0,25 oder weniger aufweist, gemessen unter Bedingungen von Temperatur von 30°C, Frequenz von 10 Hz, anfänglicher Dehnung von 5% und dynamischer Dehnungsrate von 1% und Verformungsmodus: Zug; und
   das Verhältnis der Dicke der Deckkautschukschicht zu der Dicke der Basiskautschukschicht 2,3 oder mehr beträgt.

2. Reifen nach Anspruch 1, wobei der Gehalt an Siliziumdioxid 80 Massenteile oder weniger bezogen auf 100 Massenteile der Kautschukkomponente beträgt.

3. Reifen nach Anspruch 1 oder 2, wobei der 30°C tan $\delta$ 0,20 oder weniger beträgt.

4. Reifen nach Anspruch 3, wobei der 30°C tan $\delta$ 0,15 oder weniger beträgt.

5. Reifen nach einem der Ansprüche 1 bis 4, wobei das Verhältnis der Dicke der Deckkautschukschicht zu der Dicke der Basiskautschukschicht 4,0 oder mehr beträgt.

6. Reifen nach einem der Ansprüche 1 bis 5, wobei $\alpha$ in der folgenden Formel (1), welche die Beziehung zwischen dem 30°C tan $\delta$ und der Dicke G (mm) des Laufstreifenabschnitts zeigt, 1,65 oder weniger beträgt.

$$\alpha = 30°\text{C} \tan \delta \times G \qquad (1)$$

7. Reifen nach einem der Ansprüche 1 bis 6, wobei der Verlusttangens (0°C tan $\delta$) der Kautschukzusammensetzung, welche die Deckkautschukschicht bildet, gemessen unter Bedingungen einer Temperatur von 0°C, einer Frequenz von 10 Hz, einer anfänglichen Dehnung von 5%, einer dynamischen Dehnungsrate von 1% und Verformungsmodus: Zug, 0,30 oder weniger beträgt.

8. Reifen nach einem der Ansprüche 1 bis 7, wobei $\beta$ in der folgenden Formel (2), welche das Produkt des Verlusttangens 0°C tan $\delta$, gemessen unter den Bedingungen einer Temperatur von 0°C, einer Frequenz von 10 Hz, einer anfänglichen Dehnung von 5%, einer dynamischen Dehnungsrate von 1% und Verformungsmodus: Zug, und der Dicke G (mm) des Laufstreifenabschnitts angibt, 2,00 oder weniger beträgt.

$$\beta = 0°\text{C} \tan \delta \times G \qquad (2)$$

9. Reifen nach einem der Ansprüche 1 bis 8, wobei $\gamma$ in der folgenden Formel (3), welche die Beziehung zwischen dem Styrolgehalt (Massen-%) in dem Styrol-Butadien-Kautschuk (SBR) und der Dicke G (mm) des Laufstreifenabschnitts angibt, 3,0 oder mehr beträgt.

$$\gamma = \text{Styrolgehalt in Styrol-Butadien-Kautschuk (SBR)} / G \qquad (3)$$

**10.** Reifen nach einem der Ansprüche 1 bis 9, wobei der Gehalt des Butadienkautschuks (BR) in 100 Massenteilen der Kautschukkomponente 15 Massenteile oder mehr und 25 Massenteile oder weniger beträgt.

**11.** Reifen nach einem der Ansprüche 1 bis 10, wobei der 100%-Modul (M100) der Kautschukzusammensetzung, welche die Deckkautschukschicht bildet, 2,0 MPa oder mehr beträgt.

**12.** Reifen nach einem der Ansprüche 1 bis 11, wobei der 30°C tan δ der Basiskautschukschicht kleiner ist als der 30°C tan δ der Deckkautschukschicht.

**13.** Reifen nach einem der Ansprüche 1 bis 12, wobei der Positivprofilanteil in dem Laufstreifenabschnitt 40% oder mehr beträgt, und das Produkt des Gehalts (Massenteile) des Styrol-Butadien-Kautschuks (SBR), der einen Styrolgehalt von 20 Massen-% oder weniger aufweist, in 100 Massenteilen der Kautschukkomponente und des Positivprofilanteils (%) in dem Laufstreifenabschnitt (der SBR-Anteil × Positivprofilanteil) 3000 oder mehr beträgt.

**14.** Reifen nach einem der Ansprüche 1 bis 13, wobei das Aspektverhältnis 80% oder weniger beträgt, und das Verhältnis des Siliziumdioxidgehalts (Massenteile) bezogen auf 100 Massenteile der Kautschukkomponente zu dem Aspektverhältnis (%) (der Siliziumdioxidgehalt / das Aspektverhältnis) 1,20 oder weniger beträgt.

## Revendications

**1.** Pneumatique ayant une portion de bande de roulement, dans lequel

la portion de bande de roulement a une couche de caoutchouc de coiffe et une couche de caoutchouc de base prévue radialement à l'intérieur de la couche de caoutchouc de coiffe,
la couche de caoutchouc de coiffe
contient, comme composant de caoutchouc, 40 parties en masse ou plus et 60 parties en masse ou moins de caoutchouc styrène butadiène (SBR) avec une teneur en styrène de 20 % en masse ou moins et 30 parties en masse ou moins de caoutchouc à base d'isoprène, dans 100 parties en masse du composant de caoutchouc, et comme charge, 100 parties en masse ou moins de silice par rapport à 100 parties en masse du composant de caoutchouc ; et
est formée d'une composition de caoutchouc ayant une tangente de perte à tan δ à 30 °C de 0,25 ou moins mesurée dans des conditions de température de 30 °C, une fréquence de 10 Hz, une contrainte initiale de 5 %, et un taux de contrainte dynamique de 1 % et le mode de déformation : traction ; et
le rapport de l'épaisseur de la couche de caoutchouc de coiffe à l'épaisseur de la couche de caoutchouc de base est de 2,3 ou plus.

**2.** Pneumatique selon la revendication 1, dans lequel la teneur de silice est de 80 parties en masse ou moins par rapport à 100 parties en masse du composant de caoutchouc.

**3.** Pneumatique selon la revendication 1 ou 2, dans lequel la tan δ à 30 °C est de 0,20 ou moins.

**4.** Pneumatique selon la revendication 3, dans lequel la tan δ à 30 °C est de 0,15 ou moins.

**5.** Pneumatique selon l'une quelconque des revendications 1 à 4, dans lequel le rapport de l'épaisseur de la couche de caoutchouc de coiffe à l'épaisseur de la couche de caoutchouc de base est de 4,0 ou plus.

**6.** Pneumatique selon l'une quelconque des revendications 1 à 5, dans lequel α dans la formule (1) suivante montrant la relation entre la tan δ à 30 °C et l'épaisseur G (mm) de la portion de roulement est de 1,65 ou moins,

$$\alpha = \tan\delta \text{ à } 30\ °C \times G \quad (1).$$

**7.** Pneumatique selon l'une quelconque des revendications 1 à 6, dans lequel la tangente de perte (tan δ à 0 °C) de la composition de caoutchouc formant la couche de caoutchouc de coiffe mesurée dans des conditions de température de 0 °C, une fréquence de 10 Hz, une contrainte initiale de 5 %, un taux de contrainte dynamique de 1 %, et le mode de déformation : traction est de 0,30 ou moins.

8. Pneumatique selon l'une quelconque des revendications 1 à 7, dans lequel β dans la formule suivante (2), qui indique le produit de la tangente de perte tan δ à 0 °C mesurée dans des conditions de température de 0 °C, une fréquence de 10 Hz, une contrainte initiale de 5 %, un taux de contrainte dynamique de 1 %, et le mode de déformation : traction et l'épaisseur G (mm) de la portion de bande de roulement, est de 2,00 ou moins,

$$\beta = \tan \delta \text{ à } 0\ °C \times G \quad (2)$$

9. Pneumatique selon l'une quelconque des revendications 1 à 8, dans lequel γ dans la formule (3) suivante, qui indique la relation entre la teneur en styrène (% en masse) dans le caoutchouc styrène butadiène (SBR) et l'épaisseur G (mm) de la portion de bande de roulement, est de 3,0 ou plus,

$$\gamma = \text{teneur en styrène dans le caoutchouc styrène butadiène (SBR)} / G \quad (3)$$

10. Pneumatique selon l'une quelconque des revendications 1 à 9, dans lequel la teneur de caoutchouc de butadiène (BR) dans 100 parties en masse du composant de caoutchouc est de 15 parties en masse ou plus et de 25 parties en masse ou moins.

11. Pneumatique selon l'une quelconque des revendications 1 à 10, dans lequel le module à 100 % (M100) de la composition de caoutchouc constituant la couche de caoutchouc de coiffe est de 2,0 MPa ou plus.

12. Pneumatique selon l'une quelconque des revendications 1 à 11, dans lequel la tan δ à 30 °C de la couche de caoutchouc de base est plus petite que la tan δ à 30 °C de la couche de caoutchouc de coiffe.

13. Pneumatique selon l'une quelconque des revendications 1 à 12, dans lequel le rapport de relief dans la portion de bande de roulement est de 40 % ou plus et le produit de la teneur (parties en masse) du caoutchouc styrène butadiène (SBR) ayant une teneur en styrène de 20 % en masse ou moins dans 100 parties en masse du composant de caoutchouc et le rapport de relief (%) dans la portion de bande de roulement (la teneur en SBR × le rapport de relief) est de 3 000 ou plus.

14. Pneumatique selon l'une quelconque des revendications 1 à 13, dans lequel le rapport d'aspect est de 80 % ou moins et le rapport de la teneur en silice (parties en masse) par rapport à 100 parties en masse du composant de caoutchouc au rapport d'aspect (%) (la teneur en silice / le rapport d'aspect) est de 1,20 ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016155980 A
- JP 2019137123 A
- JP 2021165324 A
- WO 2021215278 A1
- EP 4137331 A1
- EP 2452834 A2
- JP 2010111753 A
- US 4414370 B
- JP 59006207 A
- JP 5058805 B
- JP 1313522 A
- US 5010166 B


### Non-patent literature cited in the description


- *Toa Synthetic Research Annual Report TREND2000*, vol. 3, 42-45